# EUROPEAN PATENT APPLICATION

(11) **EP 2 455 844 A1**
(43) Date of publication of application: **23.05.2012**
(21) Application number: 10014446.8
(22) Date of filing: 10.11.2010
(51) Int. Cl.: G06F 3/048, G06F 17/30

(54) **Computerized method to associatively and efficiently select elements in textual electronic lists and to operate computer-implemented programs using natural language commands**

(71) Applicant: Rabben, Michael, 72108 Rottenburg (DE)
(72) Inventor: Rabben, Michael, 72108 Rottenburg (DE)
(74) Representative: Hössle Patentanwälte Partnerschaft

(57) **Abstract**

The present inventions refers to a computerized method to associatively and efficiently select at least one element from an electronic list on computers and other devices, the electronic list comprising a number of elements, each element consisting of a sequence of one or more character strings, wherein the method comprises:
generating a first graphic user interface to receive inputs from a user;
receiving a number of inputs, entered in succession,
wherein each of the number of inputs corresponds to a letter;
searching a library for a set of titles based on the plurality of inputs, wherein each title in the set includes a number of words, the number of words in each title being at least equal to the number of inputs received from the user,
wherein each of the number of inputs matches the first letter of a respective one of the number of words in each of the titles, and wherein the number of titles in the set is progressively reduced in response to each successive input;
displaying the set of titles on the first graphic user interface;
enabling the user to select one of the titles displayed on the first graphic user interface; and
displaying, on a second graphic user interface, information pertaining to the selected title, whereby the method further comprises:
a) allowing the list elements to consist of other types than titles, for example commands in natural language, persons names, folder names, file names, etc.;
b) allowing each of the number of inputs to also correspond to a digit or other printable character;
c) displaying the unfiltered electronic list prior to receiving the number of inputs;
d) if an input entered corresponds to a character defined as a delimiter, a step of additionally filtering the list by elements that have the same number of strings (words) as the number of initials entered;
e) marking the list element to be selected;
f) selecting the marked list element whereupon information pertaining to the selected element can be displayed and specific other context-dependent action pertaining to the selected list element can be triggered.

## Description

### Field of the invention

The present invention relates to two areas:
1. improving a computerized method to associatively and efficiently select elements from textual electronic lists by keyboard or the like on computers and other devices;
2. using this improved method to operate computer-implemented programs with natural language commands.

### Background of the invention

1. A common task using computer-implemented programs on computers and other devices is to select elements from electronic lists. Often these elements consist of one or more character-strings (words). This is for example the case with persons' names, folder names, file names, video titles, audio titles, book titles, document titles, pharmaceuticals, commands in natural language to operate computer-implemented programs, etc.

Using existing methods to select a textual list element, the user has to scroll through a given list. Or he starts entering the text of the desired list element in a respective search field, to get - with each letter entered - a progressively smaller sub-selection of the list. Then he can at any point scroll through the sub-selection to select the desired list element. Alternatively he can keep on entering the text until the selected list element has been distinctly filtered.

Depending on the number and on the structure of list elements, this can be time consuming and tedious. It is therefore desirable to provide a more efficient method to select textual elements from electronic lists.
2. Many existing computer-implemented programs on computers and other devices like palmtops, handhelds, mobile and stationary telephones, cameras, video, audio, and navigation devices, white goods and so forth, are complicated to use. To enter a command, the user has to either go through several menus and/or has to select a respective icon. In doing so, he has to enter special keys and/or key combinations and/or use a computer mouse or the like.

This way of entering commands has several disadvantages:
a) In order to use the computer mouse or the like, the user has to move his hand away from the keyboard and precisely position the mouse cursor to the respective spot on the screen. This can be time consuming and tedious.
b) Icons have to be known and found. Moreover icons are usually not available for all commands.
c) Key combinations usually do not give a clue to the command's meaning and differ in different computer-implemented programs on computers and other devices. As a consequence the user would have to memorize key combinations for each computer-implemented program, in order to efficiently use them.
Another disadvantage is that users happen to accidentally and unwillingly enter key combinations while editing text. This often leads to undesired effects. Sometimes the work of several hours can get messed up.

At the current state of technology even speech recognition is not a straightforward, popular alternative to operate computer-implemented programs.

It is therefore highly desirable to provide a method to operate computer-implemented programs associatively, efficiently, and consistently across computer-implemented programs on any device, using natural language, entering commands with a minimum of key strokes, and without having to use special key combinations, a computer mouse or the like.

### Summary of the invention

The present invention improves a computerized method to associatively and efficiently select an element from an electronic list on computers and other devices, the electronic list comprising a number of elements, each element consisting of a sequence of one or more character strings (words).

US 7,577,921 B2 discloses a computerized method to associatively and efficiently select at least one element from an electronic list on computers and other devices, the electronic list comprising a number of elements, each element consisting of a sequence of one or more character strings, wherein the method comprises:
generating a first graphic user interface to receive inputs from a user;
receiving a plurality of inputs, entered in succession, wherein each of the plurality of inputs corresponds to a letter;
searching the library for a set of titles based on the plurality of inputs, wherein each title in the set includes a plurality of words, the number of words in each title being at least equal to the number of inputs received from the user, wherein each of the plurality of inputs matches the first letter of a respective one of the plurality of words in each of the titles, and wherein the number of titles in the set is progressively reduced in response to each successive input;
displaying the set of titles on the first graphic user interface;
enabling the user to select one of the titles displayed on the first graphic user interface; and
displaying, on a second graphic user interface, information pertaining to the selected title";

The present invention expands this method by:
a) allowing the list elements to consist of other types than titles, for example commands in natural language, persons names, folder names, file names, etc.;
b) allowing each of the plurality of inputs to also correspond to a digit or other printable character;
c) displaying the unfiltered electronic list prior to receiving input by the user;
d) if an input entered corresponds to a character defined as a delimiter, a step of additionally filtering the list by elements that have the same number of strings (words) as the number of initials entered;
e) marking the list element to be selected;
f) selecting the marked list element whereupon not only information pertaining to the selected element can be displayed (as claimed in the patent mentioned above), but also specific other context-dependent action pertaining to the selected list element can be triggered.

In a further embodiment of invention, the method further comprises a step of receiving a search string and a step of additionally progressively filtering the list by elements containing this search string, in response to each entered character.

In a further embodiment of invention, the method further comprises a step of receiving a topic and a step of additionally filtering the list by elements belonging to that topic.

In a further embodiment of invention, the method further comprises after displaying the progressively filtered list elements, a step of automatically marking the first element displayed;

In a further embodiment of invention, the method further comprises a step of receiving the position of an element in the list of filtered elements and thereby marking that list element.

In a further embodiment of the invention, step 1f), the selection of the list element marked, can be customized to occur automatically, if its position has been entered and/or if only one list element is displayed as a result of the filtering.

In a further embodiment of the invention, the order, in which elements are listed, can be customized.

In a further embodiment of the invention, list elements can be labelled as favourites, and it can be customized that only those or all list elements are listed.

In a further embodiment of the invention, the wording of a list element, an explanation possibly associated with a list element, topic(s) a list element possibly belongs to and the wording of a topic can be customized.

In a further embodiment of the invention, new list elements and new topics can be created.

In a further embodiment of the invention, said method is implemented as a stand alone computer-implemented program.

In a further embodiment of the invention, said method is implemented as a computer-implemented add-on program for a computer-implemented target program.

In a further embodiment of the invention, said method is integrated into a computer-implemented target program as a computer-implemented sub program.

In a further embodiment of the invention, natural language commands are used as list elements to associatively and efficiently operate computer-implemented programs on computers and other devices.

In a further embodiment of the invention, natural language commands outside context are optionally hidden or greyed out and thus cannot be selected.

Further features and embodiments will become apparent from the description and the accompanying drawings.

It will be understood that the features mentioned above and those described hereinafter can be used not only in the combination specified but also in other combinations or on their own, without departing from the scope of the present disclosure.

Various implementations are schematically illustrated in the drawings by means of an embodiment by way of example and are hereinafter explained in detail with reference to the drawings. It is understood that the description is in no way limiting on the scope of the present disclosure and is merely an illustration of a preferred embodiment.

### Brief description of the drawings

Figure 1 shows an example of an electronic list displayed in a dialog window, where natural language commands for Microsoft Word^{TM} are used as exemplary list elements, and where no filtering of the list has taken place.
Figure 2 shows an example of the electronic list as in Figure 1, where the list elements have been filtered by their initials.
Figure 3 shows an example of the electronic list as in Figure 1, where the list elements have been filtered by their initials plus their number of words.
Figure 4 shows an example of the electronic list as in Figure 1, where the list elements have been filtered by a search string.
Figure 5 shows an example of the electronic list as inFigure 1, where the list elements have been filtered by a selectable topic.
Figure 6 shows an example of the electronic list as in Figure 1, where the list elements have been filtered by their initials, and the list element to be selected has been marked by entering its position.
Figure 7 shows an example of the electronic list as in Figure 1, where the list elements have been filtered by a search string, and the list element to be selected has been marked by entering its position.
Figure 8 is shown to explain the difference between preference of content and preference of position.
Figure 9 shows an example of the electronic list as in Figure 1, where the list elements have been filtered by their initials plus their number of words, and the list element to be selected has been marked by entering its position.
Figure 10 shows an excerpt of the electronic list as in Figure 1, where the order of list elements has been customized.
Figure 11 shows an example of the electronic list as in Figure 1, where only list elements labelled as favourites are listed and filtered.
Figure 12 shows an example of a dialog window for customizing a natural language command.
Figure 13 shows a second example of a dialog window for customizing a natural language command.

### Detailed description of the invention

The present invention can be implemented as a computer-implemented program to associatively and efficiently select elements from a textual electronic list.

For illustration purposes, in this detailed description as well as in the Figures, the invention is explained on the basis of such an exemplary computer-implemented program, hereinafter referred to as the Program, using natural language commands as exemplary list elements to operate Microsoft Word^{TM} as an exemplary computer-implemented target program.

However, the present invention can not only be applied to natural language commands, but to electronic lists of any kind of elements, consisting of one or more strings (words), such as persons names, folder names, file names, video titles, audio titles, book titles, document titles, pharmaceuticals, etc.

Moreover, the present invention can be applied in and to computer-implemented programs of all kind, especially office programs, accounting programs, graphic programs, internet browsers, operating systems and so forth. And that not only on computers but also on any other devices that run computer-implemented programs, such as palmtops, handhelds, mobile and stationary telephones, cameras, video, audio, and navigation devices, white goods and so forth - even if these devices have only reduced keyboards, touch screens, or the like.

It should therefore be understood that the examples used to explain the present invention are intended for purposes of illustration only and are not intended to limit the scope of the invention.

### Example of use: Using natural language commands to operate a computer-implemented target program

In an embodiment of the invention the list elements are natural language commands used to operate a computer-implemented target program.

These natural language commands generally consist of short sentences with at least a predicate (a verb) and an object (a noun), such as "open file", "colour font red", "align text left", "zoom 200%", etc.

For practical reasons, the object may be omitted for very frequent commands. For example, instead of "copy selected item(s) to clipboard" the short notation "copy" is used.

To provide a standardized usage, it is intended to phrase these natural language commands identically for all computer-implemented target programs.

Natural language commands, as well as any other type of textual list elements, can be used in any language. If a language permits different sequence of predicate and object, the sequence to be used can be customized.

### Example

In German the user has the option to list natural language commands in the order object-predicate (for example "Datei öffnen" , "Text rot färben") or in the order predicate-object (for example "Öffne Datei", "Färbe Text rot").

For better readability, natural language commands are hereinafter referred to as "Commands".

### Invoking the Program

The Program, a computer-implemented program to select list elements, which is an embodiment of the invention as explained above, can be invoked from a computer-implemented target program or from the operating system of the respective computer or other device. As with most other computer-implemented programs, this can be done via a function key, a key combination, an icon and/or a menu item.

When the Program is invoked, all list elements are displayed on the display area of the computer or other devices used, for example in a dialog window. If the list length exceeds the size of the display area, a respective beginning part of the list is displayed and means to scroll through the list are offered.

The list elements are listed in a non-hierarchical manner in alphabetical order, in any other meaningful order, or in customized order.

### Example

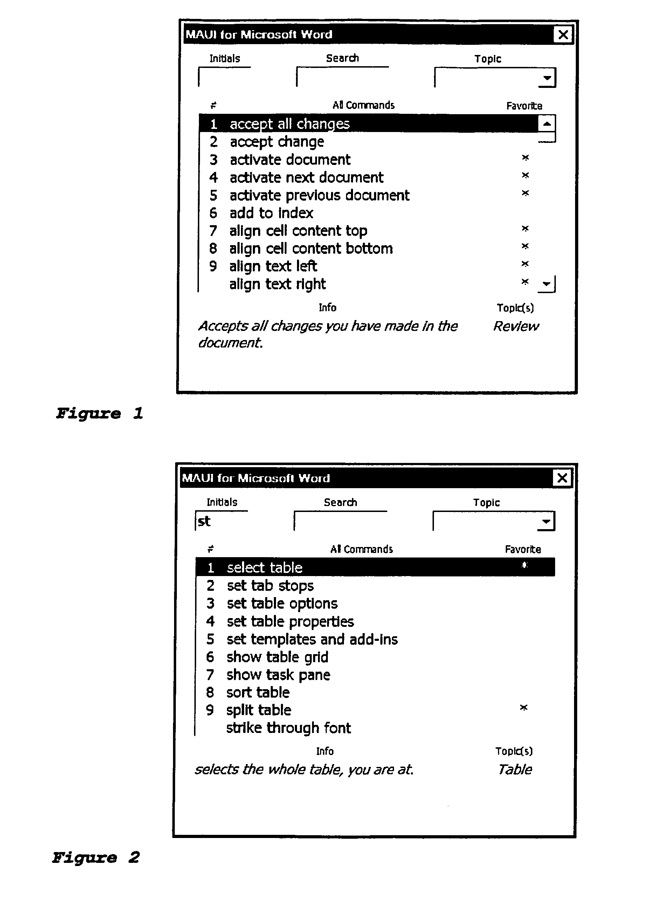

Figure 1 shows a dialog window of the Program using natural language commands to operate Microsoft Word^{TM}, after the program has been invoked and before any filtering has taken place. Only the first ten of several hundred natural language commands are visible.

In the title bar of the dialog window the term "MAUI^{TM} ", which is the abbreviation of "Mike's Associative User Interface^{TM"}, a possible name for the Program, and the name of the computer-implemented target program are displayed (in this example "Microsoft Word^{TM"}) .

At the bottom of the dialog window an explanation associated with the marked Command (in this example in field "Info") and one or more topics the marked Command belongs to (in this example in field "Topic(s)") are shown.

### Filtering list elements by their word initials

List elements can be filtered by entering the initials of their words in a respective field.

### Example

Figure 2 shows a dialog window of the Program, where the initials "st" have been entered in a respective field (in this example field "Initials"). As a result only those Commands are listed, whose first word starts with letter "s" and whose second word starts with letter "t", such as "select table", "set tab stops", etc.

The user has the option to enter numbers by initials (i.e. the first digit only) or enter them as they are.

### Example

If the option to enter numbers as they are has been selected, the Command "zoom 125%" can be filtered by entering the string "z1", "z12", or "z125" in field "Initials".

### Filtering list elements by the number of their words

In addition to filtering list elements by their word initials, list elements can be filtered by the number of their words. For this, a character defined as a word count delimiter is entered after initials have been entered. Subsequently only those list elements are listed, whose number of words matches the number of initials entered.

### Example

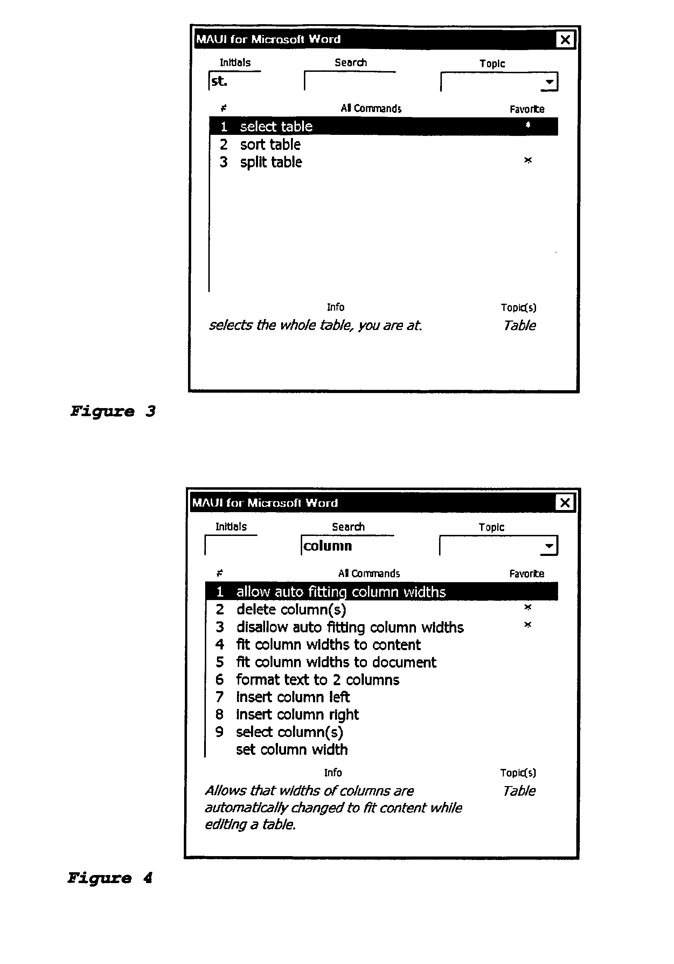

Figure 3 shows a dialog window of the Program, where a word count delimiter (in this example a period) has been entered after the initials "st". As a result only Commands with these initials consisting of two words are listed. In this example only three Commands are listed. This is a more limited selection than the one shown in Figure 2, where Commands consisting of two or more words are listed, whose first two words begin with "s" and "t".

The user can customize which characters he wants to use as a word count delimiter, for example a blank, period, comma, semicolon, dash, or hash. Excluded are letters, digits, and characters defined as position prefix (see paragraph *"Marking a list element by entering its position"* below).

### Selecting a list element

If list elements have been filtered by their word initials and if appropriate by the number of their words, only so few list elements remain, that in most cases all of them are visible on the display area. Thus the desired list element can be easily marked with arrow keys or a computer mouse and subsequently be selected by pressing a respective enter key, by double clicking a computer mouse, or the like.

Upon selection action is triggered specific to the type of list element and the context in which the Program has been invoked.

If the list consists of contacts, detailed data of the selected contact may be displayed, the phone number of the selected contact may be dialled, a new email addressing the selected contact may be created, the postal address of the contact may be inserted into a document, etc., depending on the context in which the Program has been invoked.

If the list consists of video or audio titles, the selected title may be played, copied, or be removed, detailed information of it may be displayed, etc., depending on the context in which the Program has been invoked.

If the list consists of natural language commands, the selected command is executed in the respective computer implemented target program.

Depending on the Command, a respective dialog window may be opened so that required information can be entered. If for example Command "colour font" is executed, a dialog window is opened, in which the colour can be selected.

### Additional features

The present invention can include additional features to enhance its usability and effectiveness. These are:
1. Filtering list elements by a search string
2. Filtering list elements by a topic
3. Automatically marking the first list element displayed
4. Marking a list element by entering its position
5. Automatically selecting a list element
6. Context-sensitive displaying of list elements
7. Customizing the order list elements are displayed
8. Defining and listing favourite list elements
9. Customizing list elements and topics
10. Creating customized list elements and topics

### 1. Filtering list elements by a search string

List elements can also be filtered by a search string (a sequence of letters and/or digits), contained in the list elements to be filtered.

### Example

Figure 4 shows a dialog window of the Program, where the search string "column" has been entered in the respective field (in this example field "Search"). As a result only Commands containing this search string are listed.

### 2. Filtering list elements by a topic

List elements can also be filtered by a topic, so that the user gets an overview of all list elements belonging to a topic. Topics are provided for target applications where appropriate and can be selected in a corresponding selection field. Topics can be created and customized.

### Example

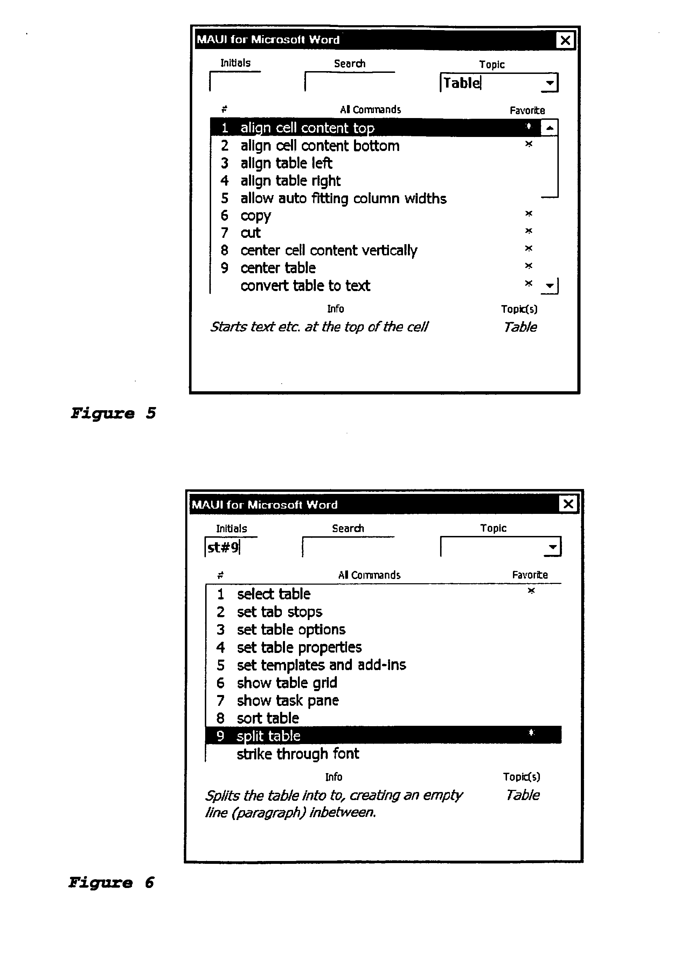

Figure 5 shows a dialog window of the Program, where topic "Table" has been selected in the corresponding selection field (in this example dropdown combo box field "Topic"). As a result only Commands belonging to that topic are listed.

A list element may belong to more than one topic. For example, the Command "copy" may belong to topics "Text", "Tables", and "Illustrations".

Filtering a topic is a useful feature in addition to filtering a search string, since list elements may not contain the names of the topics they belong to. For example the Command "align cell content top" belongs to topic "Table" without containing the term "table". Such Commands would not be found by merely filtering Commands by the search string "table".

### Note

In another embodiment of the invention, initials, search strings and topics can be entered using only one or two fields instead of three separate fields as described in the examples used.

### 3. Automatically marking the first list element displayed

With every step of progressively filtering list elements, the respective first list element displayed is automatically marked. This relieves the user from manually marking the respective first list element in order to select it.

### 4. Marking a list element by entering its position

A list element can be marked by entering its position in the list of filtered elements, optionally prefixed by a character defined as position prefix. This step is usually done after entering initials or a search string.

Marking a list element by entering its position is often faster than marking a list element with the computer mouse or arrow keys, especially if a list element is displayed further down in the list of filtered elements.

The user can customize which characters he wants to use as the optional position prefix, for example a period, comma, semicolon, dash, or hash. Excluded are letters, digits and characters defined as a word count delimiter (see paragraph *"Filtering list elements by the number of their words"* above).

### Example 1

Figure 2 shows a dialog window of the Program, where the positions of Commands are displayed in the left column of the list headed with a hash ("#") and the initials "st" have been entered in the respective field. As a result Commands whose first word starts with letter "s" and whose second word starts with letter "t" are listed, and the first Command displayed is automatically marked. Figure 6 shows the same dialog window, after a position prefix (in this example a hash) and digit "9" have been additionally entered. As a result, the ninth Command in the list is marked.

### Example 2

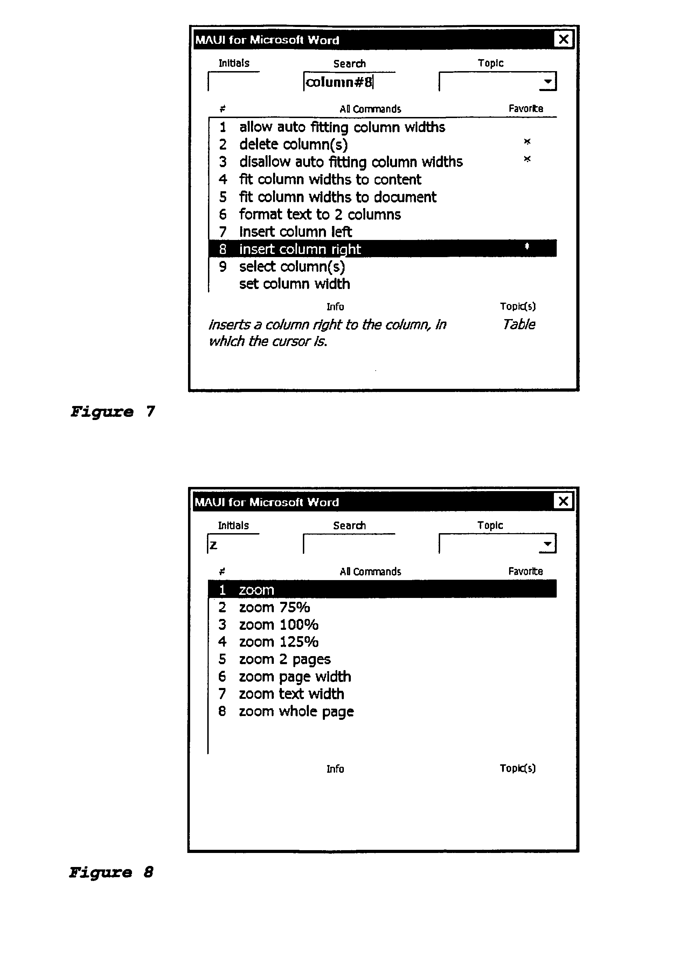

Figure 4 shows a dialog window of the Program, where the search string "column" has been entered in the respective field. As a result only Commands containing that search string are listed and the first Command is automatically marked. Figure 7 shows the same dialog window, after a position prefix (in this example a hash) and digit "8" have been additionally entered. As a result, the eighth Command in the list is marked.

In cases where the position prefix is omitted and it is ambiguous how the list elements shall be filtered, the user has the option, to give preference to filtering by the list elements' content or to give preference to filtering by their position.

### Example

Figure 8 shows a dialog window of the Program, where the initial "z" has been entered in the respective field. As a result Commands whose first word starts with letter "z" are listed.

If digit "7" is entered subsequently, and preference has been given to filtering by the Commands' content, only Command "zoom 75%" will be displayed. If preference has been given to filtering by the Commands' position, the seventh Command "zoom text width" will be marked.

The position of a list element can also be entered after a word count delimiter (see paragraph *"Filtering list elements by the number of their words"* above), which has a different effect, as shown in the following example.

### Example

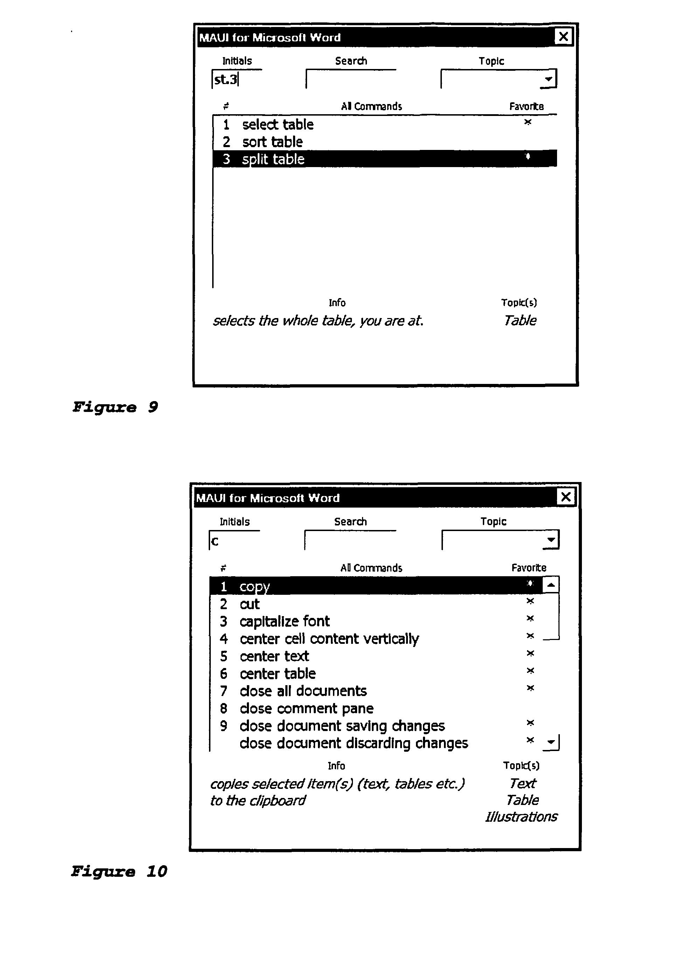

Figure 3 shows a dialog window of the Program, where the initials "st" and a word count delimiter (in this example a period) have been entered in the respective field. As a result only Commands with these initials consisting of two words are listed and the first Command is marked. Figure 9 shows the same dialog window, after digit "3" has been additionally entered. As a result the third Command in the list is marked.

### 5. Automatically selecting a list element

The user can customize that a list element is automatically selected, if the position of a list element has been entered, and/or if the filtered list has been reduced to one element.

Automatic selection of a list element means, that the user does not have to press a respective enter key, double click a computer mouse, or the like. If a list element has been automatically selected, specific context-dependent action pertaining to that list element is automatically triggered.

### 6. Context-sensitive displaying of list elements

The user can customize that list elements outside context are hidden or greyed out, so that they cannot be selected. Greying out is commonly done with menu items and symbols in many computer-implemented programs.

### Example

If the option to grey out Commands outside context has been selected and the cursor position (insertion point) is outside a table, the Command "select table" will be listed greyed out.

### 7. Customizing the order list elements are displayed

The Program lists elements alphabetically by default. In order to access frequently used list elements faster, the user can customize this order by moving list elements up or down the list.

In addition, the user can customize that list elements are listed alphabetically or that list elements are listed in customized order.

### Example

Figure 10 shows a dialog window of the Program, where Commands are listed in customized order. In this example Commands "copy" und "cut" have been moved up to the beginning of letter "c".

### 8. Defining and listing favourite list elements

List elements can be labelled as favourites, and the user can customize, if all or only favourite list elements are listed and filtered.

### Example

Figure 1 shows a dialog window of the Program, where favourite Commands are indicated by a star ("*") in the right column of the list headed "Favorite". All Commands are listed and filtered, indicated by the heading "All Commands" of the middle column of the list.

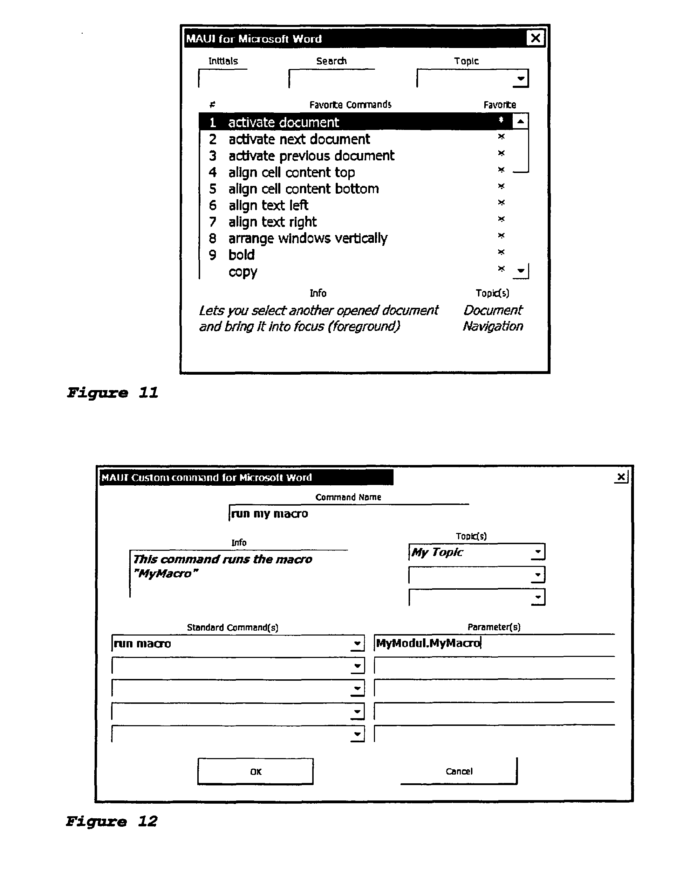

Figure 11 shows the same dialog window, where only Commands labelled as favourites are listed and filtered, indicated by the heading "Favorite Commands" of the middle column of the list.

### 9. Customizing list elements and topics

The wording of a list element, an explanation possibly associated with a list element, and the topic(s), a list element possibly belongs to, can be customized. The wording of a topic can also be customized. The original information is kept and can be restored.

### 10. Creating customized list elements

Customized Commands are created by assembling one or more standard Commands, including parameters where appropriate. When a custom Command has been selected, these standard Commands are then automatically executed in the sequence defined, using the parameters defined.

Customized list elements of other types can be created in corresponding ways, taking into account their specific nature and characteristics.

Custom topics can also be created.

### Example 1

Figure 12 shows a dialog window of the Program to customize commands, where a customized Command consisting of the standard Command "run macro" plus the parameter "MyModul.MyMacro" has been defined.

If this customized Command "run my macro" is selected, the macro "MyModul.MyMacro" is automatically executed.

Using such a customized Command relieves the user from having to select a macro from a possibly long list of macros, every time he wants to execute it.

### Example 2

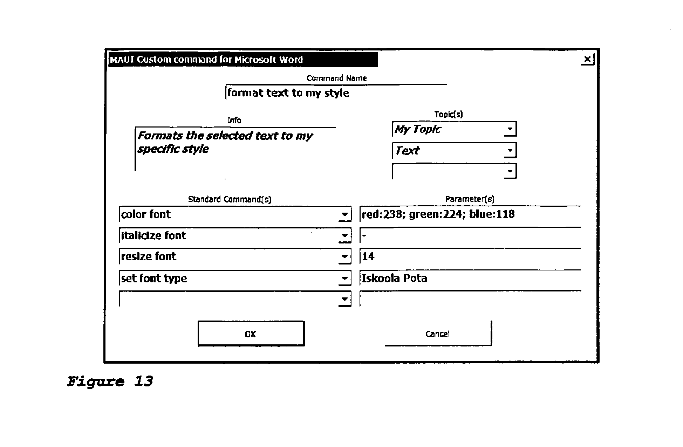

Figure 13 shows a dialog window of the Program to customize commands, where the customized Command entered consists of several standard Commands including parameters where appropriate. In this example, a set of formatting instructions has been combined to one customized Command.

Using this customized Command relieves the user from having to execute each individual standard Command every time he wants to apply this combination of formatting instructions.

### How customizing is done

To customize the Program, the Program is treated as any other computer-implemented target program. The Program becomes its own computer-implemented target program. That is: In the respective dialog window of the Program the user can open a second dialog window, in which he can select Commands to customize the Program.

Commands to customize the Program are for example:
- enter numbers by initials
- enter numbers as they are

- give preference to filtering by content
- give preference to filtering by position
- select command automatically when entering position
- don't select command automatically when entering position
- select command automatically when distinct
- don't select command automatically when distinct

- show commands outside context
- grey out commands outside context
- hide commands outside context

- move command down
- move command up
- list commands alphabetically
- list commands in customized order

- add command to favourite commands
- remove command from favourite commands
- show all commands
- show favourite commands

- customize command
- customize topic

- create custom command
- change custom command
- delete custom command

- create custom topic
- change custom topic
- delete custom topic

### Conclusion

The present invention is particularly apt . to use natural language commands as list elements to operate a computer-implemented target program.

The non-hierarchical listing of natural language commands as short natural language sentences combined with the selection via word initials, word number and the other features described is an innovation that can significantly simplify operating computer-implemented programs on computers and other devices.

Thus the present invention offers much more than just the finding of commands, as is the case with the online help of many computer-implemented programs, because a command can not only be found easily but can also be executed directly.

## Claims

1. A computerized method to associatively and efficiently select at least one element from an electronic list on computers and other devices, the electronic list comprising a number of elements, each element consisting of a sequence of one or more character strings, wherein the method comprises:
generating a first graphic user interface to receive inputs
from a user;
receiving a number of inputs, entered in succession,
wherein each of the number of inputs corresponds to a letter;
searching a library for a set of titles based on the plurality of inputs, wherein each title in the set includes a number of words, the number of words in each title being at least equal to the number of inputs received from the user, wherein each of the number of inputs matches the first letter of a respective one of the number of words in each of the titles, and wherein the number of titles in the set is progressively reduced in response to each successive input;
displaying the set of titles on the first graphic user interface;
enabling the user to select one of the titles displayed on
the first graphic user interface; and
displaying, on a second graphic user interface, information
pertaining to the selected title;
**characterized in that** the method further comprises:
a) allowing the list elements to consist of other types than titles, for example commands in natural language, persons names, folder names, file names, etc.;
b) allowing each of the number of inputs to also correspond to a digit or other printable character;
c) displaying the unfiltered electronic list prior to receiving the number of inputs;
d) if an input entered corresponds to a character defined as a delimiter, a step of additionally filtering the list by elements that have the same number of strings (words) as the number of initials entered;
e) marking the list element to be selected;
f) selecting the marked list element whereupon information pertaining to the selected element can be displayed and specific other context-dependent action pertaining to the selected list element can be triggered.

2. The method according to claim 1, the method further comprising a step of receiving a search string and a step of additionally progressively filtering the list by elements containing this search string, in response to each entered character.

3. The method according to any of claims 1 and 2, the method further comprising a step of receiving a topic and a step of additionally filtering the list by elements belonging to that topic.

4. The method according to any of claims 1 and 3, the method further comprising after displaying the progressively filtered list elements, a step of automatically marking the first element displayed;

5. The method according to any of claims 1 to 4, the method further comprising a step of receiving the position of an element in the list of filtered elements and thereby marking that list element.

6. The method according to any of claims 1 to 5, wherein it is customized that step 1f), the selection of the list element marked occurs automatically, if its position has been entered and/or if only one list element is displayed as a result of the filtering.

7. The method according to any of claims 1 to 6, wherein the order, in which elements are listed, is customized.

8. The method according to any of claims 1 to 7, wherein list elements are labelled as favourites, and wherein it is customized that only those or all list elements are listed.

9. The method according to any of claims 1 to 8, wherein the wording of a list element, an explanation possibly associated with a list element, topic (s) a list element possibly belongs to and the wording of a topic are customized.

10. The method according to any of claims 1 to 9, wherein new list elements and new topics are created.

11. The method according to any of claims 1 to 10, wherein said method is implemented as a stand-alone computer-implemented program.

12. The method according to any of claims 1 to 10, wherein said method is implemented as a computer-implemented add-on program for a computer-implemented target program.

13. The method according to any of claims 1 to 10, wherein said method is integrated into a computer-implemented target program as a computer-implemented sub-program.

14. The method according to any of claims 1 to 13, using natural language commands as list elements to associatively and efficiently operate computer-implemented programs on computers and other devices.

15. The method according to claim 14, wherein natural language commands outside context are optionally hidden or greyed out and thus cannot be selected.
